Europäisches Patentamt

European Patent Office

Office européen des brevets

(11) Veröffentlichungsnummer: **0 058 189**
B1

# EUROPÄISCHE PATENTSCHRIFT

(45) Veröffentlichungstag der Patentschrift:
28.03.84

(21) Anmeldenummer: 81902394.6

(22) Anmeldetag: 20.08.81

(86) Internationale Anmeldenummer:
PCT/EP 81/00129

(87) Internationale Veröffentlichungsnummer:
WO 82/00596 (04.03.82 Gazette 82/7)

(51) Int. Cl.³: **B 01 D 53/26**, F 26 B 21/08

(54) Verfahren zur Trocknung von feuchtem Gut und Vorrichtung zu dessen Durchführung.

(30) Priorität: 20.08.80 DE 3031446

(43) Veröffentlichungstag der Anmeldung:
25.08.82 Patentblatt 82/34

(45) Bekanntmachung des Hinweises auf die Patenterteilung:
28.03.84 Patentblatt 84/13

(84) Benannte Vertragsstaaten:
AT CH DE FR GB LI NL SE

(56) Entgegenhaltungen:
DE - A - 1 963 876
GB - A - 886 533

(73) Patentinhaber: **MITTEX AKTIENGESELLSCHAFT,**
Aeulestrasse 5, FL-9490 Vaduz (LI)

(72) Erfinder: **HUSSMANN, Peter, Via dei Pucci 4, I-Florenz (IT)**

(74) Vertreter: **Haug, Dietmar Patentanwälte Andrae, Flach, Haug et al, Steinstrasse 44, D-8000 München 80 (DE)**

Verfahren zur Trocknung von feuchtem Gut und Vorrichtung zu dessen Durchführung

Die Erfindung betrifft ein Verfahren zur Trocknung von feuchtem Gut mittels eines gasförmigen Trocknungsmediums, wobei das Trocknungsmedium aus mehreren Teilströmen besteht, von denen jeder in einem geschlossenen Primärkreis zunächst durch jeweils eine von mehreren Trocknungsvorrichtungen für zu trocknendes Gut zu dessen Entfeuchtung und anschliessend durch eine gemeinsame Trocknungsvorrichtung für alle Teilströme des Trockungsmediums zu deren Entfeuchtung geführt wird, und wobei jeder Teilstrom des Trocknungsmediums mit einem im wesentlichen konstanten Feuchtigkeitsgehalt der jeweiligen Trocknungsvorrichtung für zu trocknendes Gut zugeführt wird.

Die Erfindung betrifft auch eine Vorrichtung zur Durchführung des Verfahrens, die mehrere Trocknungsvorrichtungen für zu trocknendes Gut aufweist, von denen jede über ein Rohrleitungssystem zur Führung eines Teilstromes eines gasförmigen Trocknungsmediums mit einer Trocknungsvorrichtung zur Entfeuchtung des Trocknungsmediums verbunden ist, wobei die Trocknungsvorrichtung für das Trocknungsmedium mehrere voneinander getrennte mit einem Adsorptionsmittel gefüllte Kammern aufweist, von denen periodisch wechselnd einige an die Trocknungsmedium-Rohrleitungssysteme und eine andere an ein Rohrleitungssystem zur Führung eines Gasstromes zur Regeneration des Adsorptionsmittels über eine Ventil- oder Schiebereinrichtung angeschlossen sind, wobei jede Kammer während jeder Periode zunächst an die Trocknungsmedium-Rohrleitungssysteme und dann an das Regenerationsgasstrom-Rohrleitungssystem anschliessbar ist und die Trocknungsmedium-Rohrleitungssysteme mit jeder Kammer nacheinander verbindbar sind.

Die DE-A-1 963 876 beschreibt ein Trocknungsverfahren und eine Vorrichtung zu dessen Durchführung der eingangs genannten Art. Bei diesem Trocknungsverfahren ist jeder Teilstrom des Trocknungsmediums über die gesamte Dauer eines Trocknungsvorganges jeweils einer Trocknungsvorrichtung für zu trocknendes Gut zugeordnet. Die Entfeuchtung der Trocknungsgasteilströme zur Erzielung eines konstanten Feuchtigkeitsgehaltes vom Anfang bis zum Ende des Trocknungsvorganges erfordert einen relativ hohen Energieaufwand, da zu Beginn des Trocknungsvorganges von dem Trocknungsmedium sehr viel Feuchtigkeit aufgenommen und wieder ausgetrieben werden muss, um den gewünschten niedrigen Feuchtigkeitsgehalt zu erhalten.

Bei der vorbekannten Vorrichtung zur Durchführung des Verfahrens sind so viele mit Adsorptionsmittel gefüllte Kammern vorgesehen, wie Trocknungskreisläufe und Regenerationskreisläufe vorhanden sind, wobei jedem Trocknungskreislauf und dem Regenerationskreislauf jeweils eine Kammer zugeordnet ist. Bei jeder Umschaltung werden alle Kammern an ein jeweils anderes Rohrleitungssystem zur Führung der Gasströme angeschlossen.

Aus der DE-A-1 729 438 ist ein Trocknungsverfahren bekannt, bei welchem nur mit einem Trocknungsgasstrom gearbeitet wird, dessen Feuchtigkeitsgehalt aber während der Dauer des Trocknungsvorganges in der Weise verändert wird, dass zu Beginn des Trocknungsvorganges der Trocknungsgasstrom einen vergleichsweise hohen Feuchtigkeitsgehalt und am Ende einen vergleichsweise niedrigen Feuchtigkeitsgehalt hat. Hierdurch wird der zur Entfeuchtung des Trocknungsgasstromes erforderliche Energieaufwand niedrig gehalten und eine schonende Trocknung des feuchten Gutes erzielt.

Die Aufgabe der Erfindung besteht darin, das gattungsgemässe Verfahren und die gattungsgemässe Vorrichtung so auszubilden, dass bei wirtschaftlichem Einsatz des Adsorptionsmittels und unter vermindertem Energieaufwand die Entfeuchtung der Teilströme des Trocknungsmediums durchgeführt werden kann.

Beim Verfahren wird diese Aufgabe dadurch gelöst, dass das feuchte Gut in den Trocknungsvorrichtungen zeitlich verschoben getrocknet wird, die Teilströme des Trocknungsmediums in der gemeinsamen Trocknungsvorrichtung unterschiedlich stark entfeuchtet und den Trocknungsvorrichtungen für zu trocknendes Gut so zugeordnet werden, dass derjenigen Trocknungsvorrichtung, in welcher die Trocknung von feuchtem Gut gerade beginnt, der Teilstrom mit dem höchsten Feuchtigkeitsgehalt und derjenigen Trocknungsvorrichtung, in welcher gerade die Schlusstrocknung von feuchtem Gut stattfindet, der Teilstrom mit dem geringsten Feuchtigkeitsgehalt zugeführt wird und fortlaufend eine Umschaltung zwischen den Teilströmen des Trocknungsmediums und den Trocknungsvorrichtungen für zu trocknendes Gut in der Weise erfolgt, dass jede Trocknungsvorrichtung für zu trocknendes Gut von sämtlichen Teilströmen durchströmt wird, wobei die Teilströme des Trocknungsmediums jeder Trocknungsvorrichtung für zu trocknendes Gut nacheinander zugeführt werden.

Für die Vorrichtung wird diese Aufgabe dadurch gelöst, dass die Kammern in Gruppen von jeweils mehreren Kammern eingeteilt sind, jede von mehreren Kammergruppen an jeweils eines der Trocknungsmedium-Rohrleitungssysteme und eine andere Kammergruppe an das Regenerationsgasstrom-Rohrleitungssystem angeschlossen ist und eine oder mehrere Kammern jeder Gruppe nach einer vorbestimmten Zeitdauer an ein jeweils anderes der Rohrleitungssysteme anschliessbar ist.

Ein Vorteil des erfindungsgemässen Verfahrens besteht darin, dass durch den phasenverschobenen Ablauf der Trocknung in den Trocknungsvorrichtungen für das zu trocknende Gut die Trocknungsvorrichtung zur Entfeuchtung der Trocknungsgasteilströme kontinuierlich und damit energiesparend betrieben werden kann. Ein Vorteil der erfindungsgemässen Vorrichtung besteht darin, dass durch die fortlaufende Änderung der Zusammensetzung der Kammergruppen während ihrer Durchströmung ein weitgehend konstanter Feuchtigkeitsgehalt der sie wieder verlassenden Trocknungsgasteilströme sichergestellt ist und weniger Adsorptionsmittel erforderlich ist als bei dem vorbekannten Verfahren, wodurch der Energieaufwand zur Regeneration des Adsorptionsmittels gesenkt wird.

Eine vorteilhafte Weiterbildung des erfindungsgemässen Verfahrens besteht darin, dass jeder Teilstrom des Trocknungsmediums zu seiner Entfeuchtung durch jeweils eine von mehreren Gruppen von mit einem Adsorptionsmittel gefüllte Kammern der gemeinsamen Trocknungsvorrichtung geführt wird, während eine andere Kammergruppe von einem gasförmigen Medium zur Regeneration des in jeder Kammergruppe befindlichen Adsorptionsmittel durchströmt wird, und dass fortlaufend eine Umschaltung zwischen den Kammern und den Gasströmen in der Weise erfolgt, dass periodisch zunächst sämtliche Teilströme des Trocknungsmediums nacheinander in der Reihenfolge zunehmenden Feuchtigkeitsgehaltes und dann das gasförmige Medium zur Regeneration des Adsorptionsmittels jede Kammer der gemeinsamen Trocknungsvorrichtung durchströmen, wobei bei jeder Umschaltung eine oder mehrere Kammern jeder Gruppe der nachfolgenden Kammergruppe zugeordnet wird bzw. werden.

Zwar ist aus der DE-A-1 963 876 bekannt, wechselweise jeden Teilstrom des Trocknungsmediums durch jeweils eine mit Adsorptionsmittel gefüllte Kammer und einen zweiten Gasstrom zur Regeneration des Adsorptionsmittels durch eine andere Kammer zu leiten. Die Umschaltung zwischen den Kammern und den Gasströmen erfolgt jedoch in der Weise, dass alle Kammern einem jeweils anderen Gasstrom zugeordnet werden, so dass ein annähernd konstanter Feuchtigkeitsgehalt der sie wieder verlassenden Teilströme des Trocknungsmediums nur durch einen übermässigen mengenmässigen Einsatz des Adsorptionsmittels erhalten werden kann.

Unter dem Gesichtspunkt eines möglichst geringen Energieeinsatzes bei dem erfindungsgemässen Verfahren ist es weiterhin von Vorteil, wenn das gasförmige Medium zur Regeneration des Adsorptionsmittels die Abgase einer Turbine sind, die in einem offenen Sekundärkreis durch mehrere in Reihe geschaltete Kammern der momentan der Regeneration unterliegenden Kammergruppe und anschliessend zur Abgabe von Restwärme durch jeweils einen von mehreren regenerativen Wärmetauschern geführt werden, von denen ein anderer von einem in einem geschlossenen dritten Kreis geführten Gasstrom durchströmt wird, wobei er an diesen Wärmetauscher vom Gasstrom des Sekundärkreises zuvor abgegebene Restwärme aufnimmt, und wenn periodisch eine Umschaltung zwischen den Gasströmen des Sekundärkreises und des dritten Kreises und den Wärmetauschern in der Weise erfolgt, dass jeder Wärmetauscher wechselweise von dem Gasstrom des Sekundärkreises und dem Gasstrom des dritten Kreises durchströmt wird, der nach dem Durchströmen des jeweiligen Wärmetauschers durch eine der Kammern der momentan der Regeneration unterliegenden Kammergruppe geführt wird, wobei er dort Wärme an das Adsorptionsmittel abgibt.

Eine Weiterbildung der erfindungsgemässen Vorrichtung besteht darin, dass die Kammern in einem vertikalen Hohlzylinder durch radiale Trennwände gebildet sind und der Hohlzylinder um seine Achse schrittweise um die Breite jeweils einer Kammer drehbar ist und nach jeder Drehung nur eine Kammer jeder Gruppe an ein jeweils anderes der Rohrleitungssysteme angeschlossen ist. Vorteilhaft hierbei ist, dass die Umschaltung zwischen den einzelnen Kammern und der Gasströme sehr schnell und auch gleichzeitig erfolgen kann.

Als Alternative zu der vorgenannten Weiterbildung der erfindungsgemässen Vorrichtung können die Kammern auch in einem vertikalen feststehenden Hohlzylinder durch radiale Trennwände gebildet sein, und können die Kammern mit den Rohrleitungssystemen unter Zwischenschaltung einer Vielzahl von Ventilen verbunden sein, die schaltbar sind, derart, dass jeweils eine Kammer jeder Gruppe nach einer vorbestimmten Zeitdauer mit einem jeweils anderen der Rohrleitungssysteme verbunden ist.

Im Vergleich zu der Ausführungsform, bei der der Zylinder wie ein Drehschieber wirkt, oder bei einer Ausführungsform, bei der ein solcher Drehschieber zwischen dem Zylinder und den Rohrleitungssystemen vorgesehen ist, hat die Ausführungsform, bei der eine Vielzahl von Ventilen für die Verbindung der Kammern mit den Gasströmen vorgesehen ist, den Vorteil, dass eine Vielzahl von Schaltmöglichkeiten gegeben ist, so dass der Feuchtigkeitsgehalt, die Temperatur und andere Parameter der Trocknungsgasteilströme immer den Erfordernissen bei der Trocknung schnell und exakt angepasst werden können. Die Ausführungsform mit der Vielzahl von Ventilen erfordert jedoch einen etwas erhöhten Bauaufwand.

Aus der DE-A-1 963 876 ist allerdings bekannt, die Kammern in einem vertikalen Hohlzylinder, der drehbar gelagert ist, durch radiale Zwischenwände zu bilden. Auch ist hieraus bekannt, zwischen den Kammern und den Rohrleitungssystemen eine Vielzahl von schaltbaren Ventilen vorzusehen. Wie bereits erwähnt, durchströmt aber jeder Trocknungsgasteilstrom immer nur eine einzige Kammer bei der vorbekannten Vorrichtung.

Ein Ausführungsbeispiel der Erfindung ist in den Zeichnungen dargestellt und wird im folgenden anhand der Zeichnungen näher beschrieben. Es zeigen:

Fig. 1 eine Vorrichtung zur Durchführung des Trocknungsverfahrens nach der Erfindung in Form eines Blockschaltbildes und

Fig. 2 einen schematischen Querschnitt durch die in Fig. 1 dargestellte, als Rotationsadsorber ausgebildete Trocknungsvorrichtung zur Entfeuchtung des Trocknungsmediums.

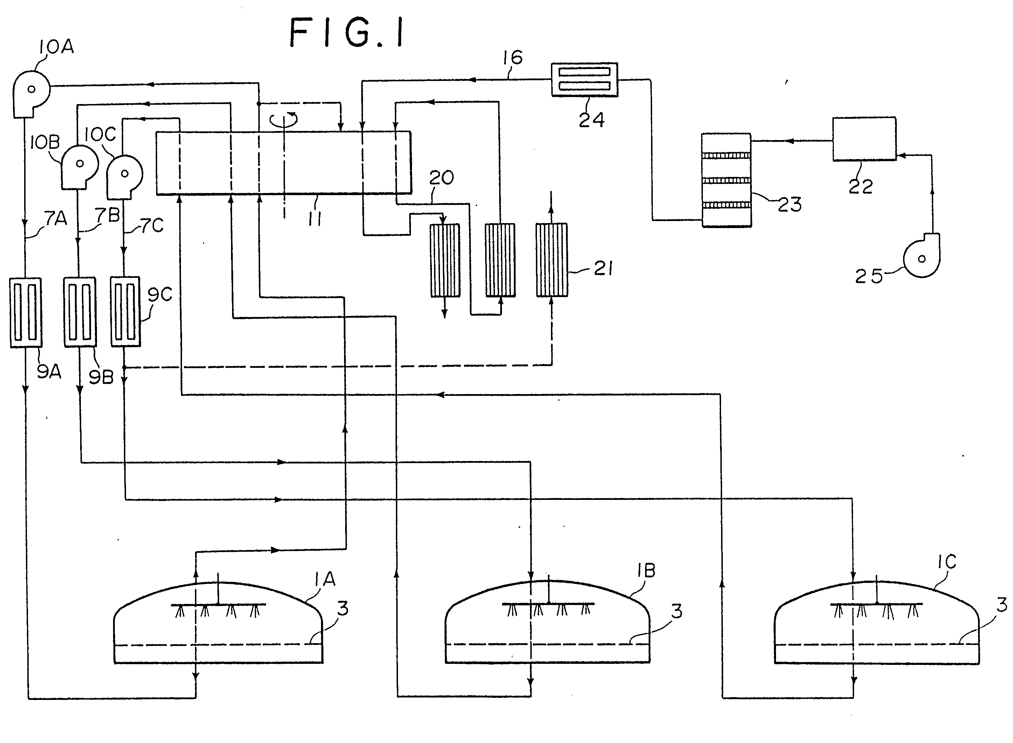

Die in Fig. 1 dargestellte Vorrichtung zur Durchführung des Trocknungsverfahrens nach der Erfindung weist drei Trocknungsvorrichtungen 1A, 1B, 1C auf, in denen drei verschiedene Phasen eines Sprühtrocknungsverfahrens zur Herstellung eines schnell löslichen Produktes ablaufen. In der Trocknungsvorrichtung 1A findet momentan die erste Phase der Sprühtrocknung statt, wobei ein Teilstrom eines Trocknungsmediums in Pfeilrichtung im Gegenstrom zu dem von oben auf einen Träger aufgesprühten Gut durch die Trocknungsvorrichtung 1A geführt wird. Dieser Teilstrom hat im Vergleich zu den nachfolgenden Trocknungsphasen einen relativ hohen Feuchtigkeitsgehalt. Der Trocknungsgasteilstrom strömt in einem geschlossenen Primärkreis durch ein Rohrleitungssystem 7A, in das ein Rotationsadsorber 11 zur Entfeuchtung des Trocknungsgasteilstromes, ein Ventilator 10A zur Förderung des Trocknungsgasteilstromes und ein Filter 9A geschaltet ist, das der Trocknungsvorrichtung 1A vorgeschaltet ist.

In der Trocknungsvorrichtung 1B findet momentan die zweite Phase der Sprühtrocknung statt, in der ein weiterer Teilstrom des Trocknungsgases entsprechend der Pfeilrichtung im Gleichstrom mit dem auf den Träger 3 gesprühten Gut durch die Trocknungsvorrichtung 1B geführt wird. Auch dieser Trocknungsgasteilstrom wird in einem geschlossenen Kreis in einem Rohrleitungssystem 7B geführt, in das wiederum der Rotationsadsorber 11 zur Entfeuchtung dieses Trocknungsgasteilstromes, ein Ventilator 10B zu dessen Förderung und ein Filter 9B geschaltet ist.

In der Trocknungsvorrichtung 1C läuft momentan die dritte Phase der Sprühtrocknung ab, in der ein extrem trockener und kalter Teilstrom des Trocknungsgases entsprechend der Pfeilrichtung im Gleichstrom zu dem auf den Träger 3 aufgesprühten Gut die Trocknungsvorrichtung 1C durchströmt. Auch dieser zur Schlusstrocknung eingesetzte Teilstrom wird in einem Rohrleitungssystem 7C in einem geschlossenen Kreis durch ein Rotationsadsorber 11, einen Ventilator 10C, ein Filter 9C und die Trocknungsvorrichtung 1C geführt.

Es ist hervorzuheben, dass die drei Trocknungsphasen nur momentan in der beschriebenen Weise den drei Trocknungsvorrichtungen 1A, 1B, 1C zugeordnet sind, denn in jeder Trocknungsvorrichtung wird ein vollständiger Sprühtrocknungsvorgang nur eben phasenverschoben zu den in den beiden anderen Trocknungsvorrichtungen ablaufenden Trocknungsvorgängen durchgeführt. Hierzu ist jedes Rohrsystem 7A, 7B, 7C mit dem Rotationsadsorber 11 schaltbar, dass durch jedes Rohrsystem das für die jeweilige Trocknungsphase erforderliche Trocknungsgas mit dem entsprechenden Feuchtigkeitsgehalt und der entsprechenden Temperatur der zugehörigen Trocknungsvorrichtung zuführbar ist. Auch ist jedes Rohrleitungssystem 7A, 7B, 7C so ausgebildet und mit nicht dargestellten Ventilen versehen, dass der jeweilige Trocknungsgasteilstrom durch die zugehörige Trocknungsvorrichtung wahlweise von oben oder von unten hindurchgeführt werden kann.

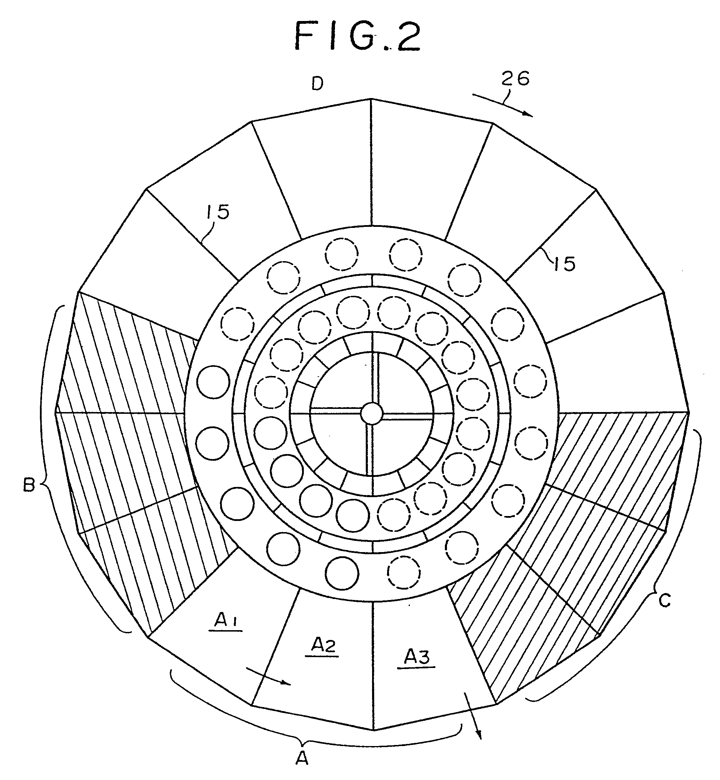

Der Rotationsadsorber 11 weist einen Hohlzylinder auf, in dem sektorförmige Kammern (Fig. 2) angeordnet sind, die durch radiale Trennwände 15 voneinander getrennt sind. Die Kammern sind mit Silikagel als Adsorbens gefüllt, durch das die Trocknungsgasteilströme hindurchgeleitet werden, um entfeuchtet zu werden.

Der Rotationsadsorber 11 ist ferner mit einem Rohrleitungssystem 16 verbunden, durch das ihm zur Aufbereitung (Desorption oder Regeneration) des Silikageles ein Inertgas zugeführt wird. Durch eine nicht näher dargestellte Umschaltvorrichtung ist es möglich, das Silikagel in einem Teil der Kammern aufzubereiten und mittels des Silikageles in einem anderen Teil der Kammern das Trocknungsmedium zu entfeuchten.

Im dargestellten Ausführungsbeispiel weist der Adsorber 11 insgesamt sechzehn Kammern auf. Das in den drei Kammern A befindliche Gel wird momentan aufbereitet. Die Kammern B sind in Parallelschaltung mit dem Primärkreis 7C verbunden, so dass das die Kammern B verlassende Trocknungsgas in den Trockner 1C gelangt, in dem das zu trocknende Gut in der dritten Trocknungsphase der Schlusstrocknung unterliegt. Das Gel in den Kammern B wurde unmittelbar vor der betrachteten, momentanen Betriebsphase frisch aufbereitet. Die Kammern C sind momentan mit dem Primärkreis 7A verbunden, so dass das sie verlassende Trocknungsgas dem Trockner 1A zugeführt wird, der in der ersten Trocknungsphase, d.h. im Gegenstrom, arbeitet. Unmittelbar vor der momentan betrachteten Betriebsphase gehörten die Kammern C zu der Gruppe D der jetzt betrachteten Betriebsphase, die augenblicklich mit dem Primärkreis 7B verbunden ist, so dass das sie verlassende Trocknungsgas dem Trockner 1B zugeleitet wird, in dem das trocknende Gut in der zweiten Phase bei Gleichstrombetrieb der Haupttrocknung unterliegt. Sämtliche Kammern der Gruppen B, C und D werden im Parallelbetrieb von den Trocknungsgasteilströmen durchströmt.

Das die Kammern der Gruppe B verlassende Trocknungsgas gelangt, wie erwähnt, in den Trockner 1C, in dem die Schlusstrocknung des zu trocknenden Gutes durchgeführt wird. Von diesem Gasstrom wird jedoch ein Teil abgezweigt, der in die Kammer A1 der Kammergruppe A geführt wird, um dort die Endaufbereitung des Geles zu bewirken, d.h. Kühlung des getrockneten Geles, ohne dieses zu befeuchten. Die eigentliche Trocknung (Regeneration, Desorption) des Geles erfolgt in der Kammer A2, in die das noch heisse und trockene Gas des Sekundärkreises 16 gelangt. In der Kammer A2 erfolgt die Desorption bei einer Temperatur von etwa 160°C. Zugemischt wird dem Inertgas aus dem Kreis 16 in der Kammer A2 das die Kammer A1 verlassende Inertgas, das die Temperatur hat, die sich bei der Kühlung des Geles in der Kammer A1 ergibt und das trocken ist. In der Kammer A3 erfolgt eine Vorwärmung und Vordesorption des Geles, indem in diese Kammer das die Kammer A2 verlassende Gas geführt wird. Das die Kammergruppe A verlassende Gas wird nun noch selektiv einem von drei regenerativen Wärmetauschern 21 zugeführt, in welchem die noch verbliebene fühlbare Wärme, insbesondere die Kondensationswärme an den Wärmetauscher abgegeben wird, ehe dieses Gas ins Freie entlassen wird.

Der Sekundärkreis wird mit den Abgasen einer Turbine 22 beschickt, die vor Eintritt in den Adsorber 11 in einem Abgasreiniger 23 und einem Filter 24 gereinigt werden. Die Turbine 22 liefert auch die zum Betrieb der Anlage benötigte Energie. Der Förderung der Verbrennungsluft dient ein Ventilator 25.

Die Rückführung der Wärme, die von dem die Kammergruppe A verlassenden Gas an die Wärmetauscher 21 abgegeben wird, in den Adsorber erfolgt mittels Inertgas, das in einem dritten Kreis 20 strömt, der als geschlossener Kreis selektiv jeweils einen der Wärmetauscher und den Adsorber einschliesst. Leckverluste in diesem Kreis 20, ebenso wie in den Primärkreisen 7A, 7B, 7C werden aus dem ins Freie entweichenden Gas des Kreises 16 entnommen. Die Wärmetauscher 21 werden wie erwähnt mit wechselnden Funktionen benutzt. Jeweils ein Wärmetauscher nimmt Wärme aus dem Gas des Kreises 16 auf, um sie nach Umschaltung an das Gas des Kreises 20 abzugeben.

Ein Teil des aus dem Adsorber 11 abgeführten, entfeuchteten Trocknungsgases geht durch einen der drei Wärmetauscher, um ihn vollends abzukühlen, so dass er wieder für die Kondensation bereitsteht. Die vom Gas des dritten Kreises aufgenommene Wärme bewirkt eine Temperaturerhöhung z.B. von 20°C auf 30°C.

Nach einer bestimmten, durch Parameter wie Feuchtigkeitsgehalt und Temperatur der Trocknungsgasteilströme vorgegebene Zeitdauer, wird der Anschluss des Rotationsadsorbers an die Rohrleitungssysteme durch Drehung des Rotationsadsorbers in Richtung des Pfeiles 26 um den Betrag einer Kammerbreite geändert, so dass eine kontinuierliche Trocknung bei weitgehend gleichbleibenden Feuchtigkeits- und Temperaturwerten der Trocknungsgasströme und eine fortlaufende, gleichmässige Aufbereitung des Geles ermöglicht wird.

Eine sinnvolle Mischung der Gasströme in Verbindung mit der mehrfachen Ausnutzung des Wärmeinhaltes des Aufbereitungsmediums ergibt für jeden Einzelfall eine maximale Energieausnutzung.

Zusammenfassend lässt sich das mit der erfindungsgemässen Anlage in Verbindung mit den Trocknungsvorrichtungen durchgeführte Verfahren als ein Mehrstufen-Adsorptions-Dehydratations-Verfahren charakterisieren.

## Patentansprüche

1. Verfahren zur Trocknung von feuchtem Gut mittels eines gasförmigen Trocknungsmediums, wobei das Trocknungsmedium aus mehreren Teilströmen besteht, von denen jeder in einem geschlossenen Primärkreis zunächst durch jeweils eine von mehreren Trocknungsvorrichtungen (1A, 1B, 1C) für zu trocknendes Gut zu dessen Entfeuchtung und anschliessend durch eine gemeinsame Trocknungsvorrichtung (11) für alle Teilströme des Trocknungsmediums zu deren Entfeuchtung geführt wird, und wobei jeder Teilstrom des Trocknungsmediums mit einem im wesentlichen konstanten Feuchtigkeitsgehalt der jeweiligen Trocknungsvorrichtung (1A, 1B, 1C) für zu trocknendes Gut zugeführt wird, dadurch gekennzeichnet, dass das feuchte Gut in den Trocknungsvorrichtungen (1A, 1B, 1C) zeitlich verschoben getrocknet wird, die Teilströme des Trocknungsmediums in der gemeinsamen Trocknungsvorrichtung (11) unterschiedlich stark entfeuchtet und den Vorrichtungen (1A, 1B, 1C) für zu trocknendes Gut so zugeordnet werden, dass derjenigen Trocknungsvorrichtung (1A, 1B, 1C) in welcher die Trocknung von feuchtem Gut gerade beginnt, der Teilstrom mit dem höchsten Feuchtigkeitsgehalt und derjenigen Trocknungsvorrichtung (1A, 1B, 1C), in welcher gerade die Schlusstrocknung von feuchtem Gut stattfindet, der Teilstrom mit dem geringsten Feuchtigkeitsgehalt zugeführt wird und fortlaufend eine Umschaltung zwischen den Teilströmen des Trocknungsmediums und den Trocknungsvorrichtungen (1A, 1B, 1C) für zu trocknendes Gut in der Weise erfolgt, dass jede Trocknungsvorrichtung (1A, 1B, 1C) für zu trocknendes Gut von sämtlichen Teilströmen des Trocknungsmediums durchströmt wird, wobei die Teilströme des Trocknungsmediums jeder Trocknungsvorrichtung (1A, 1B, 1C) für zu trocknendes Gut nacheinander zugeführt werden.

2. Trocknungsverfahren nach Anspruch 1, dadurch gekennzeichnet, dass jeder Teilstrom des Trocknungsmediums zu seiner Entfeuchtung durch jeweils eine von mehreren Gruppen (A, B, C, D) von mit einem Adsorptionsmittel gefüllten Kammern der gemeinsamen Trocknungsvorrichtung (11) geführt wird, während eine andere Kammergruppe (A) von einem gasförmigen Medium zur Regeneration des in dieser Kammergruppe (A) befindlichen Adsorptionsmittels durchströmt wird, und dass fortlaufend eine Umschaltung zwischen den Kammern und den Gasströmen in der Weise erfolgt, dass periodisch zunächst sämtliche Teilströme des Trocknungsmediums nacheinander in der Reihenfolge zunehmenden Feuchtigkeitsgehaltes und dann das gasförmige Medium zur Regeneration des Adsorptionsmittels jede Kammer der gemeinsamen Trocknungsvorrichtung (11) durchströmen, wobei bei jeder Umschaltung eine oder mehrere Kammern jeder Gruppe (A, B, C, D) der nachfolgenden Kammergruppe (A, B, C, D) zugeordnet wird bzw. werden.

3. Trocknungsverfahren nach Anspruch 1 oder Anspruch 2, dadurch gekennzeichnet, dass das gasförmige Medium zur Regeneration des Adsorptionsmittels Abgase einer Turbine sind, die in einem offenen Sekundärkreis durch mehrere in Reihe geschaltete Kammern (A2, A3) der momentan der Regeneration unterliegenden Kammergruppe (A) und anschliessend zur Abgabe von Restwärme durch jeweils einen von mehreren regenerativen Wärmetauschern (21) geführt wird, von denen ein anderer von einem in einem geschlossenen dritten Kreis (20) geführten Gasstrom durchströmt wird, wobei er an diesen Wärmetauscher (21) vom Gasstrom des Sekundärkreises zuvor abgegebene Restwärme aufnimmt, und dass periodisch eine Umschaltung zwischen den Gasströmen des Sekundärkreises und des dritten Kreises (20) und den Wärmetauschern (21) in der Weise erfolgt, dass jeder Wärmetauscher (21) wechselweise von dem Gasstrom des Sekundärkreises und dem Gasstrom des dritten Kreises (20) durchströmt wird, der nach dem Durchströmen des jeweiligen Wärmetauschers (21) durch eine der Kammern (A3) der momentan der Regeneration unterliegenden Kammergruppe (A) geführt wird, wobei er dort Wärme an das Adsorptionsmittel abgibt.

4. Trocknungsverfahren nach Anspruch 3, dadurch gekennzeichnet, dass ein Teil des eine unmittelbar zuvor regenerierte Kammergruppe (B) verlassenden Teilstromes des Trocknungsmediums abgezweigt und durch eine Kammer (A1) der der Regeneration unterliegenden Kammergruppe (A) geleitet wird, die unmittelbar zuvor von dem Gasstrom des Sekundärkreises durchströmt worden ist, wobei er das Adsorptionsmittel in dieser Kammer (A1) abkühlt.

5. Trocknungsverfahren nach Anspruch 3 oder Anspruch 4, dadurch gekennzeichnet, dass Leckverluste im dritten Kreis (20) sowie Verluste im Primärkreis durch Gas aus dem Sekundärkreis ersetzt werden.

6. Trocknungsverfahren nach einem der Ansprüche 3 bis 5, dadurch gekennzeichnet, dass die gasförmigen Medien im Primärkreis und im Sekundärkreis teilweise durch unmittelbares Beeinflussen des Mediums, teilweise durch Mediummischen auf einen optimalen Zustand gebracht werden.

7. Trocknungsverfahren nach einem der Ansprüche 3 bis 6, dadurch gekennzeichnet, dass ein von einem Teilstrom des gasförmigen Trocknungsmediums nach dessen Entfeuchtung abgezweigter Teil durch jeweils einen der Wärmetauscher (21) geführt wird, der unmittelbar zuvor von dem Gasstrom des dritten Kreises (20) durchströmt worden ist, wobei er ihn vollends abkühlt, bevor er wieder von dem Gasstrom des Sekundärkreises durchströmt wird.

8. Vorrichtung zur Durchführung des Trocknungsverfahrens nach einem der vorhergehenden Ansprüche, mit mehreren Trocknungsvorrichtungen (1A, 1B, 1C) für zu trocknendes Gut, von denen jede über ein Rohrleitungssystem (7A, 7B, 7C) zur Führung eines Teilstromes eines gasförmigen Trocknungsmediums mit einer Trocknungsvorrichtung (11) zur Entfeuchtung des Trocknungsmediums verbunden ist, wobei die Trocknungsvorrichtung (11) für das Trocknungsmedium mehrere voneinander getrennte mit einem Adsorptionsmittel gefüllte Kammern aufweist, von denen abwechselnd einige an die Trocknungsmedium-Rohrleitungssysteme (7A, 7B, 7C) und eine andere an ein Rohrleitungssystem (16) zur Führung eines Gasstromes zur Regeneration des Adsorptionsmittels über eine Ventil- oder Schiebereinrichtung angeschlossen sind, wobei jede Kammer während einer Periode zunächst an die Trocknungsmedium-Rohrleitungssysteme (7A, 7B, 7C) und dann an das Regenerationsgasstrom-Rohrleitungssystem (16) anschliessbar ist und die Trocknungsmedium-Rohrleitungssysteme (7A, 7B, 7C) mit jeder Kammer nacheinander verbindbar sind, dadurch gekennzeichnet, dass die Kammern in Gruppen (A, B, C, D) von jeweils mehreren Kammern eingeteilt sind, jede von mehreren Kammergruppen (B, C, D) an jeweils eines der Trocknungsmedium-Rohrleitungssysteme (7A, 7B, 7C) und eine andere Kammergruppe (A) an das Regenerationsgasstrom-Rohrleitungssystem (16) angeschlossen ist, und eine oder mehrere Kammern jeder Gruppe (A, B, C, D) nach einer vorbestimmten Zeitdauer an ein jeweils anderes der Rohrleitungssysteme (7A, 7B, 7C, 16) anschliessbar ist bzw. sind.

9. Vorrichtung nach Anspruch 8, dadurch gekennzeichnet, dass die Kammern in einem vertikalen Hohlzylinder durch radiale Trennwände (15) gebildet sind und der Hohlzylinder um seine Achse schrittweise um die Breite jeweils einer Kammer drehbar ist und nach jeder Drehung nur eine Kammer jeder Gruppe (A, B, C, D) an ein jeweils anderes der Rohrleitungssysteme (7A, 7B, 7C, 16) angeschlossen ist.

10. Vorrichtung nach Anspruch 8, dadurch gekennzeichnet, dass die Kammern in einem vertikalen, feststehenden Hohlzylinder durch radiale Trennwände (15) gebildet sind und die Kammern mit den Rohrleitungssystemen (7A, 7B, 7C, 16) unter Zwischenschaltung einer Vielzahl von Ventilen verbunden sind, die derart schaltbar sind, dass jeweils eine Kammer jeder Gruppe (A, B, C, D) nach der vorbestimmten Zeitdauer mit einem jeweils anderen Rohrleitungssystem (7A, 7B, 7C, 16) verbunden ist.

**Claims**

1. A process for the drying of moist material using a drying fluid in the form of a gas, wherein the said drying fluid is made up of a number of separate currents, of which each is run in a closed primary circuit first through one of a number of drying means (A1, 1B, and 1C) for the said material to be dried and then through a common drying means (11) for all the said currents of the drying fluid for dehumidifying same, and wherein each current of the said drying fluid is sent with a materially constant moisture level to the separate drying means (1A, 1B and 1C) for the said material that is to be dried, characterized in that the said moist material is dried in the said drying means (1A, 1B and 1C) at different times, the said currents of the said drying fluid are dehumidified to different degrees in the said common drying means (11) and are so related to the said drying means (1A, 1B and 1C) for the said material to be dried, that the drying means (1A, 1B and 1C) in which the said drying of moist material is at the point of being started is supplied with the said current having the highest moisture level, and the said drying means (1A, 1B and 1C) in which the said moist material is in the last stage of the drying thereof is supplied with the said current having the lowest moisture level and there is a continuous switching over between the said currents of drying fluid and the drying means (1A, 1B and 1C) for the said material to be dried in such a way that all currents of the said drying fluid are run through each drying means (1A, 1B and 1C) for the said material to be dried, the said currents of the said drying fluid being supplied to each drying means (1A, 1B and 1C) one after the other.

2. The drying process as claimed in claim 1 characterized in that for dehumidifying it each current of the said drying fluid is run through each one of a number of groups (A, B, C and D) of spaces filled with adsorbing substance of the said common drying means (11), while another group of spaces (a) has a fluid in the form of a gas moving through it for the regeneration of the said adsorbing substance in this group of spaces (A), and in that there is a continuous switching over between the said spaces and the said gas currents in such a way that at given times first all the said currents of the said drying fluid in the order of increasing moisture level and then the said gas fluid (for the purpose of regenerating the adsorbing substance) are sent through each space of the said common drying means (11), one or more spaces of each group (A, B, C and D) being related to the next space groups (A, B, C and D) thereafter every time switching over takes place.

3. The drying process as claimed in claim 1 or claim 2 characterized in that the said fluid in the form of gas for the regeneration of the said absorbing substance is in the form of the exhaust gases of a turbine, said gases being sent in an open secondary circuit through a number of spaces (A2 and A3) joined up in series of the said space group (A) undergoing regeneration at the time and then, for giving up the rest of the said heat, through one of a number of regenerative heat exchangers (21), of which another has a a gas current moving through it, said gas flowing in a closed third circuit (20), said gas current then taking up the rest of the said heat as earlier given up by the said gas current of the said secondary circuit at this heat exchanger (21), and in that at given times there is a switching over between the said gas currents of the said secondary circuit and of the said third circuit (20) and the said heat exchangers (21) in such a way that each heat exchanger (21) has first the said gas current of the said secondary circuit and the gas current of the said third circuit (20) moving through it in turn, said gas current after moving through the said heat exchanger (21) in question being sent through one of the spaces (A3) of the space group (A) that at the time is undergoing regeneration, in giving up heat therein to the adsorbing substance.

4. The drying process as claimed in claim 3 characterized in that a part of the said current (of the said drying fluid) coming out of the said space group (B) that has been freshly regenerated, is branched off and sent through a space (A1) of the space group (A) in the process of being regenerated and which right beforehand has had the said gas current of the said secondary circuit sent through it, it then cooling down the said adsorbing substance in this space (A1).

5. The drying process as claimed in claim 3 or claim 4 characterized in that the leakage losses in the third circuit (20) and losses in the said primary circuit are made good with gas from the secondary circuit.

6. The drying process as claimed in any one of claims 3 to 5 characterized in that the fluids in the form of a gas in the said primary circuit and in the said secondary circuit are put in an optimum condition partly by directly producing an effect on the said fluid and partly by mixing same.

7. The drying process as claimed in any one of claims 2 to 6 characterized in that part of a current of the said gas drying fluid, branched off from same after same has been dehumidified, is sent through one of the said heat exchangers (21) in each case, said heat exchanger (21) having right beforehand had the said gas current of the said third circuit (20) sent through it so that the said said exchanger is completely cooled down thereby, before the said gas current of the said secondary circuit is sent through the said exchanger.

8. An apparatus for undertaking the drying process as claimed in any one of the claims hereinbefore comprising a number of drying means (1A, 1B and 1C) for the said material to be dried, of which each is joined up by way of a piping system (7A, 7B and 7C) for a current of a drying fluid in the form of a gas, with a drying means (11) for dehumidifying the said drying fluid, and the said drying means (11) for the said drying fluid has a number of separate spaces filled with an adsorbing substance, of which in turn some are joined up with the said piping system (7A, 7B and 7C) for the said drying fluid and another is joined with a pipe system (16) for running a gas current for regeneration of the said adsorbing substance through a valve means, and each space is able to be joined up at one time firstly with the said piping systems (7A, 7B and 7C) for the said drying fluid and then with the said piping system (16) for the regeneration gas current, and the said piping systems (7A,7B and 7C) are able to be joined up with each space one after the other, characterized in that the spaces are placed in groups (A, B, C and D), each group having more than one space therein, each group of a number of groups of spaces (B, C and D) being joined up in each case with one of the piping systems (7A, 7B and 7C) and another group of spaces (A) is joined with the piping system (16) for the regeneration gas and one or more of the spaces of each group (A, B, C and D) is or are able to be joined up after a given time in each case with another of the piping systems (7A, 7B, 7C and 16).

9. The apparatus as claimed in claim 8 characterized in that the said spaces are formed in an upright hollow cylinder by radial parting walls (15) and the said hollow cylinder is able to be turned in steps about its axis, such steps being equal to the width of one space and after each turn only one space of each group (A, B, C and D) is joined up every time with a different system in the said piping systems (7A, 7B, 7C and 16).

10. The apparatus as claimed in claim 8 characterized in that the said spaces are formed in an upright, fixed hollow cylinder by radial parting walls (15) and the said spaces are joined up with the said piping systems (7A, 7B, 7C and 16) by way of a number of valves that may be so worked that each time one space of a group (A, B, C and D) is joined after a given time with another one of the said piping systems (7A, 7B, 7C and 16).

**Revendications**

1. Procédé pour sécher un matériau humide au moyen d'un fluide de séchage gazeux, dans lequel le fluide de séchage est constitué de plusieurs courants partiels, dont chacun est d'abord guidé, dans un circuit primaire fermé, à travers respectivement l'un de plusieurs dispositifs de séchage (1A, 1B; 1C) pour le matériau à sécher, afin de le déhydrater, et ensuite à travers un dispositif de séchage commun (11) pour tous les courants partiels de fluide de séchage pour déshydrater ceux-ci, chaque courant partiel de fluide de séchage étant amené au dispositif de séchage concerné (1A, 1B; 1C) pour le matériau à sécher, avec une teneur en humidité sensiblement constante, caractérisé en ce que le matériau humide est séché dans les dispositifs de séchage (1A, 1B, 1C) avec un décalage chronologique, que les courants partiels de fluide de séchage sont déshydratés plus ou moins fortement dans le dispositif de séchage commun (11) et qu'ils sont affectés aux dispositifs de séchage (1A, 1B, 1C) pour le matériau à sécher en sorte qu'on amène au dispositif de séchage (1A, 1B, 1C) dans lequel vient juste de commencer le séchage du matériau humide, le courant partiel ayant la plus forte teneur en humidité, et au dispositif de séchage (1A, 1B, 1C) dans lequel a lieu le séchage final du matériau humide, le courant partiel ayant la plus faible teneur en humidité, et qu'il se produit constamment une commutation entre les courants partiels de fluide de séchage et les dispositifs de séchage (1A, 1B, 1C) pour le matériau à sécher, à savoir que chaque dispositif de séchage (1A, 1B, 1C) pour le matériau à sécher est parcouru par tous les courants partiels de fluide de séchage, les courants partiels de fluide de séchage étant amenés successivement à chaque dispositif de séchage (1A, 1B, 1C) pour le matériau à sécher.

2. Procédé de séchage selon la revendication 1, caractérisé en ce que chaque courant partiel du fluide de séchage est guidé, pour être déshydraté, respectivement à travers l'un de plusieurs groupes (A, B, C, D) de chambres, remplies d'adsorbant, du dispositif de séchage commun (11), tandis qu'un autre groupe (A) de chambres est traversé par un fluide gazeux pour régénérer l'adsorbant se trouvant dans ce groupe de chambres (A), et qu'il se produit constamment une commutation entre les chambres et les courants gazeux, à savoir qu'en premier et périodiquement, tous les courants partiels de fluide de séchage traversent successivement et dans l'ordre croissant de teneur en humidité, chaque chambre du dispositif de séchage commun (11), qu'ensuite le fluide gazeux servant à régénérer l'adsorbant traverse ladite chambre à chaque commutation une chambre, ou plusieurs chambres de chaque groupe (A, B, C, D) étant associée à chacun des groupes (A, B, C, D) de chambres suivants.

3. Procédé de séchage selon la revendication 1 ou la revendication 2, caractérisé en ce que le fluide gazeux pour régénérer l'adsorbant est constitué par les gaz d'échappement d'une turbine, qui sont guidés dans un circuit secondaire ouvert, à travers plusieures chambres (A2, A3) montées en série, du groupe de chambres (A) momentanément soumis à la régénération, et qui sont ensuite guidés pour céder la chaleur résiduelle, à travers respectivement l'un de plusieurs échangeurs thermiques (21) de régénération, dont un autre est traversé par un courant gazeux guidé dans un troisième circuit fermé (20), ce courant prenant la chaleur cédée auparavant à cet échangeur thermique (21) par le courant gazeux du circuit secondaire, et qu'il se produit périodiquement une commutation entre les courants gazeux du circuit secondaire et du troisième circuit (20) et les échangeurs thermiques (21), en sorte que chaque échangeur thermique (21) est traversé alternativement par le courant gazeux du circuit secondaire et par le courant gazeux du troisième circuit (20) qui, après avoir traversé l'échangeur thermique correspondant (21) est guidé à travers l'une des chambres (A3) du groupe de chambres (A) momentanément soumises à la régénération, où il cède de la chaleur à l'adsorbant.

4. Procédé de séchage selon la revendication 3, caractérisé en ce qu'une partie du courant partiel de fluide de séchage quittant un groupe de chambres (B) régénérées immédiatement avant est dérivée et est conduite à travers une chambre (A1) du groupe de chambres (A) soumise à la régénération, qui a été traversée immédiatement avant par le courant gazeux du circuit secondaire, qui refroidit l'adsorbant dans cette chambre (A1).

5. Procédé de séchage selon la revendication 3 ou la revendication 4, caractérisé en ce que les pertes par fuite dans le troisième circuit (20), ainsi que les pertes dans le circuit primaire, sont remplacées par du gaz du circuit secondaire.

6. Procédé de séchage selon l'une quelconque des revendications 3 à 6, caractérisé en ce que les fluides gazeux dans le circuit primaire et dans le circuit secondaire sont amenés à un état optimal partie en agissant directement sur le fluide, partie en mélangeant les fluides.

7. Procédé de séchage selon l'une quelconque des revendications 3 à 6, caractérisé en ce qu'une partie dérivée d'un courant partiel de fluide de séchage est guidée, après sa déshydratation, à travers respectivement l'un des échangeurs thermiques (21), qui a été traversé immédiatement avant par le courant gazeux du troisième circuit (20), et qu'elle le refroidit totalement avant qu'il soit à nouveau traversé par le courant gazeux du circuit secondaire.

8. Dispositif pour mettre en œuvre le procédé de séchage selon l'une quelconque des revendications précédentes, comportant plusieurs dispositifs de séchage (1A, 1B, 1C) pour le matériau à sécher, dont chacun est relié par l'intermédiaire d'un système de canalisations (7A, 7B, 7C) pour guider un courant partiel d'un fluide de séchage gazeux, à un dispositif de séchage (11) pour déshydrater le fluide de séchage, le dispositif de séchage (11) pour le fluide de séchage comportant plusieurs chambres remplies d'adsorbant, séparées l'une de l'autre, dont quelques-unes sont raccordées alternativement aux systèmes de canalisations pour le fluide de séchage (7A, 7B, 7C) et dont une autre est raccordée à un système de canalisations (16) pour guider un courant gazeux pour régénérer l'adsorbant, par l'intermédiaire d'un dispositif de clapets ou de distributeurs, chaque chambre pouvant être raccordée, pendant une période, d'abord aux systèmes de canalisations de fluide de séchage (7A, 7B, 7C) et ensuite au système de canalisations de courant gazeux de régénération (16), les systèmes de canalisations de fluide de séchage (7A, 7B, 7C) pouvant être reliés successivement à chaque chambre, caractérisé en ce que les chambres sont réparties en groupes (A, B, C, D) de plusieurs chambres, que chacun de plusieurs groupes de chambres (B, C, D) est raccordé respectivement à l'un des systèmes de canalisations de fluide de séchage (7A, 7B, 7C), et qu'un autre groupe de chambres (A) est raccordé au système de canalisations de courant gazeux de régénération, et qu'une ou plusieurs chambres de chaque groupe (A, B, C, D) peuvent être raccordées, après un laps de temps prédéterminé, respectivement à un des autres systèmes de canalisations (7A, 7B, 7C, 16).

10. Dispositif selon la revendication 8, caractérisé en ce que les chambres sont formées dans un cylindre creux vertical fixe par des cloisons de séparation radiales (15) et que les chambres sont raccordées aux systèmes de canalisations (7A, 7B, 7C, 16) en intercalant une multiplicité de clapets pouvant être commandés, en sorte que chaque fois une chambre de chaque groupe (A, B, C, D) est raccordée, après un laps de temps prédéterminé, chaque fois à un autre système de canalisations (7A, 7B, 7C, 16).

# FIG.1

# F I G.2